# EUROPEAN PATENT APPLICATION

(11) **EP 2 557 524 A1**
(43) Date of publication of application: **13.02.2013**
(21) Application number: 11380066.8
(22) Date of filing: 09.08.2011
(51) Int. Cl.: G06K 9/00, G06K 9/66

(54) **Method for automatic tagging of images in Internet social networks**

(71) Applicant: Teclis Engineering, S.L., 15220 Bertamiráns Ames (A Coruña) (ES)
(72) Inventor: Martinez Soñora, Isidoro, 15220 Bertamirans Ames (A Coruña) (ES)
(74) Representative: Carvajal y Urquijo, Isabel

(57) **Abstract**

The present invention relates to a method for automatic tagging of images in social networks comprising a face detecting process (110) for detecting faces in the image to be tagged by means of determining regions in which faces are detected and obtaining a quality level for each detected face. It also comprises a facial recognition process (112) by means of obtaining a descriptor of the detected face, a comparison between the descriptor of the detected face with descriptors of reference faces for establishing a confidence level of each comparison. Each detected face can be tagged (114) automatically as the corresponding social network user and further determine if the descriptor of the detected face is usable as the descriptor of reference face incorporating the detected face with its descriptor and quality level, to the group of reference faces of said user.

## Description

### Field of the Invention

The present invention is encompassed within the field of Internet social networks, and more specifically in the automatic tagging of people in photographs and videos used in the social network environment.

### Background of the Invention

Face recognition and association is an extremely difficult and complicated process which pose a series of problems: recognising to whom a profile face belongs to, the face of a person of colour in a dark environment, a person wearing glasses or hat, etc.

Currently no Internet social network performs an automatic tagging of the photographs or videos which are uploaded to said social network.

The social network Facebook does a facial recognition, detecting frontal faces but not profiles, and it does not automatically identify to whom they belong to. With this functionality, it only attempts to speed up the process of clicking in the area to be tagged but needs the interaction of the user to execute and deal with the tagging.

In the social network MyHeritage, ancestors can be searched for creating a family tree. This network carries out face detection but without performing the identification.

It is therefore necessary to develop a method for automatic tagging applied to the images used in the social networks which solves the previous problems.

### Description of the Invention

The present invention allows reducing the work of the social network users in tagging of photos/videos and also a significant growth of the relationships between the users. When performing an automatic tagging the confidence level of the identification and the quality of the image uploaded to act as a template for the identified user will be assessed.

As a user uploads photos and tags his/her friends, the system will automatically adjust the values of the sampling so that, with time and network use, the sampling will be larger and better each time. This will mean that when a user uploads a photo, that photo will be examined together with all the templates from the sample collections (which will be created automatically) of his/her friends. In this process several things will be done:
1- New samples will be taken in the case that the identification is successful.
2- From those new samples there will be a characteristic identification vector which will be stored in the database together with the sample. Thus, at the time of requesting the samples it will be checked if a characteristic vector exists, of values in the identification. If it is the case, less work will be done in collecting values from the samples and only the vectors of the new photo will be taken and they will be compared with the vectors previously obtained from the samples.
3- Biometric is a problem which is currently not 100% reliable when it comes to identifying faces but the present invention can be used in a social network of this type due to the fact that the samples or templates with which the new photos will be compared will be limited by the friends and by the templates which will be adjusted and processed from lowest to highest quality of the parameters of the characteristic vector of the sample.
   In order to carry out the automatic tagging of faces in images, artificial intelligence techniques geared towards two key tasks of the process will be used:
   1. Face detection
   2. Face recognition

In the face detection phase the system will analyze the image uploaded by the user and will attempt to locate all the faces that are present in said photo. Furthermore, to each of these faces, there will be assigned a "quality" value which will indicate the quality of the region of the face in an umbrella measurement (from 0 to 100, for example) to enable calibrating the reliability of the results obtained in subsequent phases (if the starting quality of the area of the face is low, the results will logically be less reliable).

The face recognition phase starts from the results of the previous phase, i.e., a group of faces found in the photo. In this phase a series of comparatives will be done to determine if the faces found correspond with a known user of the social network. Initially the comparatives will be performed for each face found in the uploaded photo, with the reference templates of the user who uploaded the photo and his/her first level friends. This would be configurable and it would be possible to perform the recognition analysis with the characteristic vectors of users related in second level, or any other random level, with the user.

In the face detection phase the result of the process will be a series of rectangles in the uploaded photo. These rectangles demarcate minimum areas in the image where a face is found. Each of these rectangles will also have a quality value associated thereto indicating how reliable the information is in relation to the face in terms of contrast, photo quality etc.

Different automatic methods can be used for face detection in scenes. Each of them uses information of different nature which allows complementing the results thereof in a suitable manner.

The Viola-Jones method is a cascade classifier. It is based on analysing the photo searching for rectangular regions where structures that meet simple intensity properties appear. A face can be specified as a cascade of simple properties such that those regions which have passed the test for all properties will be selected. This also allows detecting frontal and profile faces increasing the detection range of the present invention. This detector is based on intensity properties and shape and it operates in real time.

The Viola-Jones method, given its cascade classifier nature, requires the compliance of a series of shape and intensity properties at a region to be considered as a face. In natural photos where interactions happen between individuals this is not always possible. Due to occlusions, lighting problems in certain areas, facial movements, etc., the Viola-Jones classifier could fail.

Due to this, an additional method for detecting faces based on colour information, which is detailed in document *"*Skin region analysis for face detection", A. Fernández, M. Ortega, C. Mariño, M. G. Penedo, of the II Workshop de Reconocimiento de Formas y Análisis de Imágenes (AERFAI), 2010, ISBN: 978-84-92812-66-0, which is included herein by reference, has been developed. The idea is to detect those areas of the image that correspond to areas of skin and filter those that meet a series of restrictions of overall shape and proportion of points of skin therein (taking into account the eyes, mouth etc). TSL or HSV type perceptual colour spaces , which allow isolating the colour information from the luminosity information in a point of the image are used in this method. In this case, only the chromatic (colour) information is of interest for detecting the regions of skin.

Lastly, once the faces have been obtained with the different methods, those regions sufficiently similar in terms of its location in the image are merged to prevent multiple detections of the same face. This filtering is guided by a similitude parameter with respect to the regions defined as the distance between the centres of the regions.

To measure the quality of the region corresponding to a face the contrast information present therein is used as criterion. That parameter can be calculated from the intensity histogram in the regions of interest. The more disperse the histogram values are, the greater the contrast present in the region will be. Once the contrast has been calculated, it will be assigned a quality value normalized between 0 and 100, based on the possible maximum value which will correspond to 100. The 0 will be for those completely homogeneous regions, i.e., all the values of the histogram correspond to a unique intensity value.

In terms of face recognition, this will be the phase where the faces detected in the previous phase will be tagged. To enable tagging the faces it is necessary to obtain a description thereof (which will known as descriptor) and a methodology for comparison between the descriptor of the detected faces and the descriptors previously stored for faces already tagged in the system. This comparison between descriptors allows establishing a confidence level that they belong to the same individual and, therefore, that the new detected face belongs to the user owner of the stored descriptor.

The comparison is possible since a group of reference descriptors (being as complete as possible and covering different poses and facial conditions of the user) is stored for each network user. A new detected face must be sufficiently similar (through the comparison between descriptors) to any of the reference faces of a user to enable tagging as such.

An additional process is performed in this phase. If the quality (detection phase) and confidence (recognition phase) level with respect to a reference face of a user are sufficiently high for a detected face, the descriptor of the new face could be used as new reference descriptor for the user known within its group of reference descriptors.

With regards to the automatic artificial intelligence techniques for describing and comparing facial regions, different methods can be used and even combined. Two different methodologies for describing facial regions for their recognition are considered: those attempting to find characteristic points within the facial area and those processing the entire facial region (holistic) numerically to obtain an overall characteristic vector.

The combination of both recognition families can be carried out both at descriptor level (concatenating both descriptors into a single one) and at a comparison level (combining both measurements of confidence by arithmetic means, the minimum, etc.).

In terms of the recognition techniques based on characteristic points, the present invention mainly focuses on two techniques.

Among the most popular face-based identification systems which use an overall approximation lie those Identification systems based on eigenfaces using a broad learning group of numerous people to build, through a PCA (Principal Component Analysis) based dimensionality reduction process, a representative eigenfaces group and to enable coding each face to be analyze as a combination of eigenfaces of the system. Fisherfaces are based on an idea similar to the eigenfaces but to code the fisherfaces of the FDA (Fisher Discriminant Analysis) system instead of PCA, thus selecting those regions of the image less sensitive to illumination changes and to facial expressions. A backpropagation network can also be used for compressing the information present on the faces, i.e., automatically selecting the more relevant characteristics and carrying out the identification process. The 3D systems are based on deformable 3D models which code the shape and texture of the face and is robust with respect to illumination and view point changes. All these methodologies are applicable to our problem and the measurements of confidence associated between any two descriptors would be given by a reverse function to the distance between both vectors. It must be taken into account that the vectors herein are a group of actual numerical values obtained from the processing of the original image data.

The results of the holistic processing can be combined with those of the characteristic point processing. In the proposed system the so-called operators of interest are used on the face-based identification problem. The operators of interest are computational tools the objective of which is to find suitable regions to perform *feature matching.* Among the desired characteristics of said regions are: being distinctive, i.e., contain a large amount of information; and being robust with respect to illumination, scale, rotation and perspective changes. Once said regions have been extracted from the image, a descriptor, i.e., a vector which will code the information which they contain and will allow the subsequent comparison between different regions will be assigned to each of them.

The more relevant operators of interest are currently divided into: those based on corners, including the EBR (Edge Based Regions) and the Harris operator; and those based on intensity including the MSER (Maximally Stable Extremal Regions), IBR (Intensity Based Regions) and the Kadir operator.

The EBR operator selects the corners of an image and, through the edges merging into each corner, builds the corresponding region of interest. The Harris operator detects the corners present in an image and, through the analysis of the geometric and photometric characteristics of the contiguous pixels automatically selects the scale and related parameters which best define the region of interest. The MSER operator detects a group of regions closed to perspective changes and linear transformations of the intensity, from the successive intensity threshold changes. The Kadir operator selects the regions of the image which maximize the entropy, i.e., which contain the largest amount of information. Lastly, the EBR operator detects local intensity extrema and analyses the intensity changes along the ray emanating from the detected extrema for building the region of interest. All the previously described operators of interest are based on different properties and, therefore, detect different regions of the image which in many cases can be complementary. All the results obtained can be analysed to select the most suitable one or to decide the best way of combining them for the correct identification of faces.

Just as numerous operators of interest can be found in the bibliography, numerous descriptors to code the information that they contain can also be found. Said descriptors must have great discriminatory power and is robust with respect to many photometric and geometric transformations. Among the most popular descriptors are: those based on intensity, such as histograms, *shape context* or SIFT; space-frequency techniques, such as Gabor filters or wavelets; differentiating descriptors, such as the steerable filters or complex filters; and those based on other techniques such as invariant moments. Among all the descriptors in the literature, the importance of SIFT (Scale Invariant Feature Descriptor) which quantifies the gradient of a set of subregions of the region in a histogram and is robust with respect to orientation, illumination and perspective changes is highlighted.

From the regions selected by the descriptors as relevant, the regions of the actual image will be compared with the regions of the database, to that end different measurements such as the Euclidean distance, city-block distance, the cosine distance or the chi-square distance will be evaluated.

These measures will allow calculating the measurement of confidence between the compared descriptors.

### Brief Description of the Drawings

A set of drawings which aid to better understand the invention and which is related specifically to an embodiment of said invention depicted as a non limitative example thereof is very briefly described below.
Figure 1 depicts a method for automatic tagging applied to the photographs uploaded to a social network.
Figure 2 depicts the flow chart of the automatic tagging function of the image.
Figure 3 shows the friendship levels in which the search for the identification of a face in an image can be performed.

Figure 4 depicts the flow chart of the process of friendship suggestions.

### Detailed Description of the Invention

The present invention carries out an automatic tagging when a user uploads an image in the social network. The system is responsible for auto-tagging the members of the image provided that they are friends, or are in a friendship level with their friends. To that end the use of algorithms based on facial recognition artificial intelligence and biometrics is resorted to. Not only a face is detected but the system will also be responsible to indicate to whom that face belongs to.

This functionality allows the users a lot of time when it comes to tagging their friends. This also entails a tagging control so that the tagging performed will be correct.

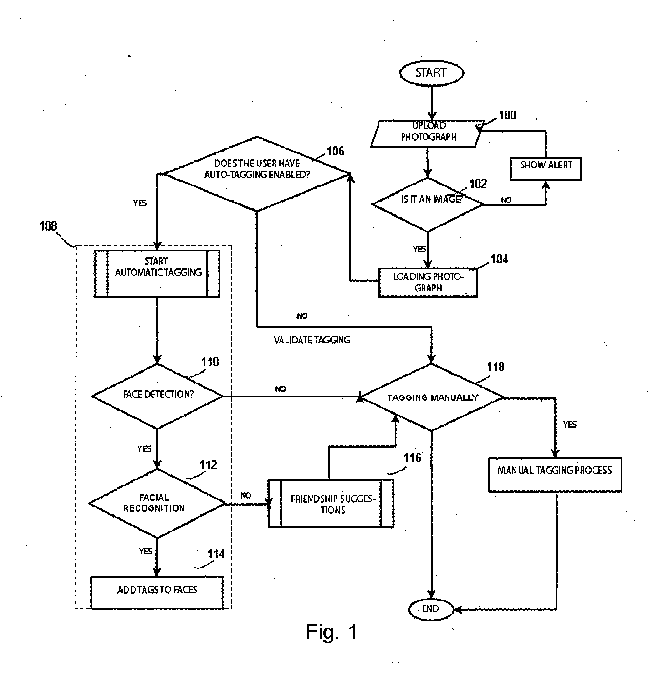

Figure 1 depicts a method for automatic tagging applied to the photographs or videos uploaded to a social network. Firstly, a user uploads 100 a photograph or video to the social network. After it is checked 102 that it is in fact an image, the image 104 is loaded and it is checked 106 that the user has enabled the automatic tagging option, in which case the automatic tagging process 108 is started, in which a face detecting process 110 and a facial recognition process 112 is first started to try to identify the detected faces. The facial recognition is performed up to a determined "n" friendship level : my friends, friends of my friends, friends of friends of my friends, etc. Another level of more advanced automatic tagging is look for a similarity in the people of the same social environment: by friendship, by location, popularity, etc. The tagging at different friendship levels (people who are not friends) is carried out to enable performing friendship requests. The identified faces are conveniently tagged 114. For those faces not identified in the facial recognition process 112, a friendship suggestion procedure 116 is started. In the automatic tagging process 108 the following can occur:
- If a face has been detected and the facial recognition indicates with a relatively high success factor that it is a friend of the users, the system automatically tags it.
- In the event that the success factor is not high it will be automatically tagged but the user will be asked if the tagging is correct.
- In the event that a face is found and it is not any of the user's friends, a background process which is responsible for searching for similarities of that tag in a "n" friendship level is launched. When finding similarities with high success factors, that relationship will be stored in the database for making friendship requests between the users present in the images.

In the event that the user does not have the automatic tagging option enabled or that no face detection has been done or that the faces are not correctly identified, the user will be prompted to perform a manual tagging 118.

The result from the application of the automatic tagging can be used to establish friendship suggestions between the members of the social network, in the event that the user has already been recognised but they are not a direct friend (if they are a friend of friends). In addition to being able to make friendship suggestions by location, friends in common, invitations between the users, among others, a friendship suggestion can be established by uploading a photo which the system will be responsible to tag automatically. In the automatic tagging process, the system will, in the event of not finding contrastable results between friends, search the social network giving the possibility of establishing new friendships. This entails that if a user uploads a photo and the system finds faces that are in the social network but are not friends, it will be responsible to make a friendship suggestion between both. This results in the expansion in the relationships between the members of the social network achieving an enormous growth in friendships and in the social network itself.

The case can arise where a user uploads an image to the social network and no direct similarities are found to tag some of the members. The present invention can search in all the database of the social network in the background, or up to a certain friendship level, similarities with the users not found among the list of friends. The case can arise where no coinciding results are found due to two reasons: either because the photo is of very bad quality and the algorithm is unable to recognise the members or because those people do not have a profile in the social network. In the latter case the social network could prompt the user to invite the people not identified in the uploaded image, allowing the growth of the social network.

Once the person in the image has been recognised, a tag will be created whether or not friendship exists between both users (the person who has uploaded the photo and the person who has been tagged to the photo). If friendship exists, a frame can be added around the face in the photo indicating said friendship. In the event that friendship does not exist, it will be stored to examine in different friendship levels if that detected user is a friend of any of the friends of friends and thus successively depending on the friendship level to be reached.

Two database are used in the automatic tagging and friendship suggestion process: a template database and a tag database.

The template database is that in which the system takes the samples, templates or references to perform the automatic tagging. The samples are updated with time, where the system is responsible to always leave the better samples, those with the best quality.

Initially the template database of each user will be empty therefore if the user wants to enable the automatic tagging option they will have to upload at least one photo of themselves. Initially, no template quality assessments will be done but the better it is, the better the initial results will be.

The template database comprises a user template tables with the following fields:
- Template identifier.
- Social network user identifier which to the template belongs to.
- Template image.
- Template quality, made up of a percentile measurement (in the range [0,100]%, wherein the highest values will be those of highest confidence and of greatest weight at the time of contrasting and launching the tagging procedure) in which several values of interest which will be useful for the following will be taken into account:
   - In the tagging process the templates of highest quality will be assessed with greatest weight. For example, if there are 10 templates organised from the highest to lowest "template quality" in the template table of user X, the recognition of the faces in the photographs will be done by considering these input templates, giving more priority to the values obtained by means of the templates of highest quality.
   - At the end of the tagging new samples which will serve to increase or update the template table according to the template quality value of each obtained sample, will be obtained.
- Characteristic identification vector: mathematical data defining a face. When a tagging is performed, it starts by finding a face and then contrasting it with the templates of the template table. In the connectionist networks based on face detection the so-called "neurons" which are no more that a function receiving some parameters and returning others according to several factors, are used. Those returned parameters in face detection are the vector characteristic of the face: mathematical results identifying a face, figures resulting from complex calculations which upon storing them in the template table (when a template is input) make calculating them again unnecessary therefore saving a lot of effort.
   For example, a photo is uploaded, a face is identified, the templates of all their friends (firstly for friendship level 1) is searched for in the template table, the characteristic vector of the tag is calculated and is contrasted with the values of the already calculated characteristic vectors of the template table and taking the template quality into account. Therefore, it could occur that if the characteristic vector of the tag is relatively good, there is the possibility of using it as a new template. Thus the image of the tag is inserted into the template table.

With the template database ready, the automatic tagging process can be started. To that end, a tag database is used which comprises a tag table with the following fields:
- Tag identifier.
- Image identifier identifying the image object of the tagging (usually uploaded by a social network user).
- User identifier identifying the user detected in the tagged image.
- Type (photograph or video) indicating if it is a photograph or a video which has been the object of the tagging.
- Central horizontal position of the tag (X) within the image.
- Central vertical position of the tag (Y) within the image.
- Width of the tag.
- Height of the tag.
- Photogram of the tag (in the case of a video).
- Percentage of satisfaction or confidence in the facial detection.
- Friendship suggestion (zero by default, one if the user who has uploaded the image has already sent a friendship request).

This tag table of tags will be filled by each face detected in a photo or video automatically or by each manual tagging performed by the user.

In the event that a face is found but to whom it belongs to is not detected, a "0" will be placed in the *user identifier* field. Thus, and in the background, the social network server will be responsible to search if there is a person who looks the same as the tagged person found with a high value of confidence up to a determined friendship level (friends of friends, friends of friends of friends, etc.). Thus a friendship request can be launched between both people, once having been identified. Once the user accepts the friendship request, he/she will be auto-tagged in the images of his/her new friend.

The automatic tagging function of the image, function_tagging *(image, templates)* which is responsible for automatically tagging, receiving the following parameters, will be defined below:
- The image for tagging: for example the URL of the image.
- The templates: an array of the templates obtained in the template database table. The templates will be those of friends or of the friendship levels chosen to be searched. Table 1 shows an example of a template array, with:
• The user identifiers;
• The image: URL of each of the templates available in the template database;
• Template quality (the array will be organised from highest to lowest quality by default);

**TABLE 1**

| *Template Array* | |
|---|---|
| *User Identifier* | *Quality* |
| 1 | 90% |
| 1 | 67% |
| 308 | 98% |
| 308 | 83% |
| 308 | 76% |
| 308 | 23% |
| 46 | 56% |

The automatic tagging function of the image returns some return values, an array with r registers, one for each of the faces found in the source image, whether or not identification exists. Each register will have the following fields:
- *User Identifier*. Identifier of the user recognised in the source image. In the event of an unsuccessful identification, the user identifier will have a value equal to zero.
- X: Horizontal position of the frame in pixels where the identified face is found.
- Y: Vertical position of the frame in pixels where the identified face is found.
- Width of the frame where the identified face is found.
- Height of the frame where the identified face is found.
- Confidence level. A percentage, which will be zero in the event of identification failure. ,
- Image identifier: Name of the image assigned to the frame of the face found. This will be unique and unrepeatable.
- A template: The value will be 1 in the event that the sample is of good quality. It will only make sense if face identification is successful.

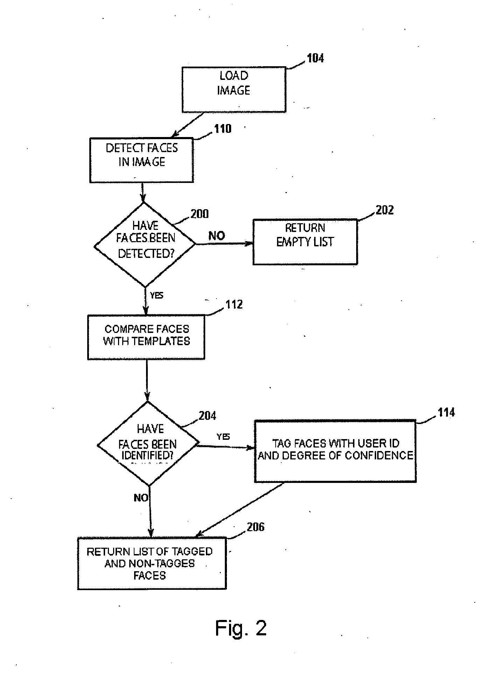

Figure 2 shows the flow chart of the automatic tagging function of the image 108, once the image has been loaded 104. A face detecting process 110 is performed in the image. Whether there are any detected faces is checked 200. In the event that no faces are detected, the automatic tagging function returns an empty list 202. In the event that faces are detected the facial recognition process 112 is started, comparing each detected face with the templates. Whether there are identified faces is checked 204, in which case the faces 114 are tagged with the user identifier and the degree of confidence. Finally the automatic tagging function returns 206 a list of tagged and non-tagged faces.

The automatic tagging function of the image will be used in the uploading of an image by the users, with the advantage of being able to use it to deal with friendship suggestions. Said friendship suggestions can be performed by searching in the tag table all the registers which have *user identifier*=0 and *friendship suggestion*=0. Said search will return different image identifiers where such condition is met.

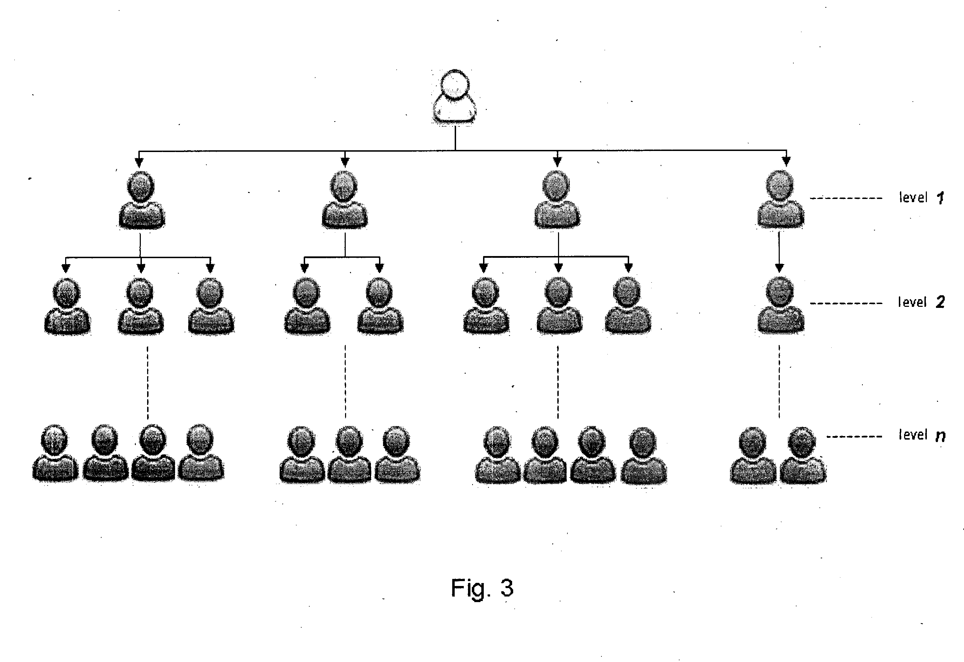

There is a parallel function responsible for searching for the path (URL) of each one of the image identifiers. Thus the first parameter of the automatic tagging function of the image (*image*) is available. With respect to the second input parameter of the automatic tagging function of the image (*templates*), the number of friendship levels n to be processed, according to that shown in Figure 3, must be taken into account. In the event of using a single level (level 1) all the friends of the user will be searched, whereas if searching in a next level (level 2) all the friends of friends will be searched, and so on successively. Thus all the samples of the template table are obtained according to the determined n friendship level.

The automatic tagging function of the image returns all those similarities found. In this case, only the values with *user identifier* not equal to zero will be assessed. In the case of finding them, the data corresponding to the tag will be inserted into a relationship table; furthermore the field of *friendship suggestion* of the tag table will have a value of 1 once the friendship suggestion has been performed. The relationship table is where everything related with the relationships between the social network users is noted: established friendships, friendship requests, etc.

In the event that one of the users accepts to be a friend, the register in the table of the friendship suggestions data base will be deleted and the data of the new tag will be added to the tag table.

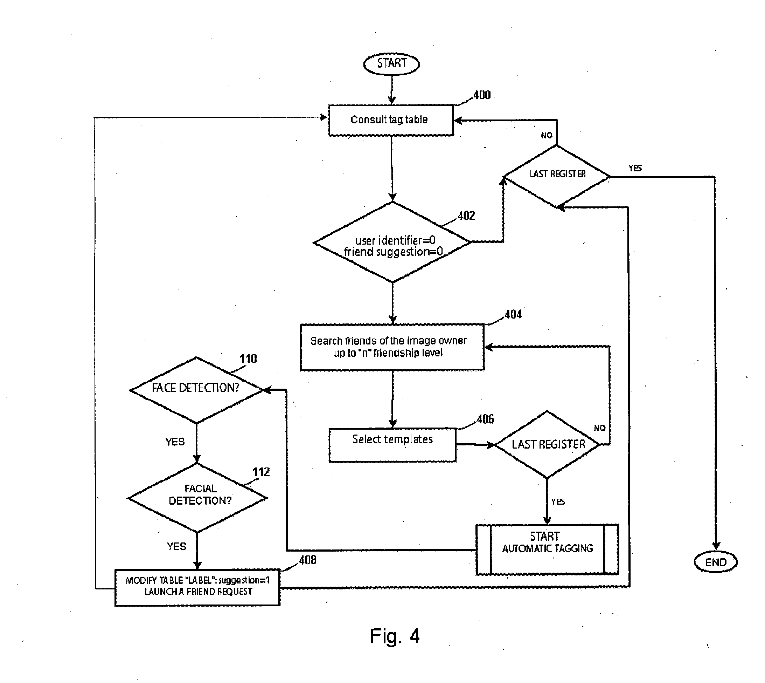

Figure 4 depicts the flow chart of the friendship suggestions process. This process will be launched in the background when the load of the server is low, therefore being conditioned by the load of the server and by the high number of tags without corresponding to users in the tag table (id_user=0). Firstly the tag table 400 is consulted, scanning the different registers, checking 402 for each register if a user has not been identified and a friendship request has not already been sent to the user *(identifier of user*=0, *friendship suggestion=0).* In the event that the register in question meets said requirements, the friends of the owner of the corresponding uploaded image will be searched 404 up to a "n" friendship level (according to Figure 3) and all the templates of the users found will be selected 406. The automatic labelling process 108 (automatic tagging function of the image) is then started. In case of a positive identification of the user within the group of sent templates, a friendship request will be sent 408 to the user in question and the tag table of the corresponding register will be modified, modifying the *friendship suggestion* field to 1 (i.e., indicating that the friendship suggestion has been carried out). The scanning of the table then continues until no more registers of the tag table are left to consult.

As a result of the automatic tagging and friendship suggestions it is possible to add photograph tags to a user who has just created an account in the social network. This is possible since the faces of all the people detected when a user uploads an image is always stored in the tag table. Thus when a user creates an account in the social network and becomes friends with several users, the system is responsible to search for image tags of his/her friends in the tag table where the *user identifier*=0 and will notify them of the images of his/her friends in which him/her is present.

This has an application taking into account the possibility that a user steals another user's account, something very common social networks. Thus when the user re-registers he/she will not need to tag his/her photos again or to ask his/her friends to tag him/her, rather the system will be responsible do it automatically.

## Claims

1. A method for automatic tagging of images in Internet social networks, **characterised in that** it comprises:
a face detecting process (110) for detecting faces in the image to be tagged, said process comprising:
- determining regions of the image in which faces are detected;
- obtaining a quality level of each detected face, a quality indicator of the region of the image in which the face has been detected;
a facial recognition process (112) to identify the detected faces, said process in turn comprising for each detected face:
- obtaining a descriptor of the detected face;
- comparing the descriptor of the detected face with of descriptors of reference faces from a group of social network users, in turn each reference face being associated to a determined quality level according to the quality of the region of the image which comprises the reference face;
- establishing a confidence level of each comparison, considering to that end the quality level of the reference faces;
- determining (204), according to the confidence level of the comparisons, if the detected face corresponds with the reference face of a social network user;
for each detected face, in the event that it corresponds with a reference face of a social network user:
- automatically tagging (114) the detected face in the image as the corresponding social network user;
- determining according to the quality level of the detected face and the confidence level of the comparison if the descriptor of the detected face can be used as descriptor of the reference face of the corresponding user, and where appropriate incorporating the detected face with its descriptor and quality level to the group of reference faces of said user.

2. The method for automatic tagging according to claim 1, wherein the image to be tagged is uploaded by a social network user.

3. The method for automatic tagging according to claim 2, additionally comprising:
if the detected face corresponds with a social network user who is not a friend of the user who uploaded the image to be tagged, performing at least one friendship suggestion between both users.

4. The method for automatic tagging according to any of claims 2 to 3, wherein the comparisons of the facial recognition process (112) are performed for each face found in the image uploaded by the user, at least with the reference faces of the user who uploaded the image to be tagged and the reference faces of their friends.

5. The method for automatic tagging according to any of claims 2 to 4, wherein the comparisons of the facial recognition process (112) are performed for each face found in the image uploaded by the user, up to a determined n friendship level.

6. The method for automatic tagging according to any of claims 2 to 5, wherein the method for automatic tagging of the image uploaded by a social network user is carried out if said user has enabled the automatic tagging option.

7. The method for automatic tagging according to any of claims 2 to 6, comprising in event that the confidence level of the comparison is lower than a determined level, asking the user who uploaded the image if the automatic tagging is correct.

8. The method for automatic tagging according to any of the previous claims, wherein only a determined number of samples with the greatest quality level are kept as reference faces of a user.
